# EUROPÄISCHE PATENTSCHRIFT

(11) **EP 2 178 954 B1**
(45) Veröffentlichungstag und Bekanntmachung des Hinweises auf die Patenterteilung: **22.01.2014**
(21) Anmeldenummer: 08787162.0
(22) Anmeldetag: 13.08.2008
(51) Int. Cl.: C08J 9/00, C08L 61/28, B24D 3/32, B24D 11/00

(54) **VERFAHREN ZUR HERSTELLUNG VON ABRASIVEN SCHAUMSTOFFEN**
METHOD FOR THE PRODUCTION OF ABRASIVE FOAMS
PROCÉDÉ DE FABRICATION DE MOUSSES ABRASIVES

(30) Priorität: 14.08.2007 EP 07114281
(43) Veröffentlichungstag der Anmeldung: 28.04.2010
(73) Patentinhaber: BASF SE, 67056 Ludwigshafen (DE)
(72) Erfinder: ALTEHELD, Armin, 55543 Bad Kreuznach (DE); HAHN, Klaus, 67281 Kirchheim (DE); MÖCK, Christof, 68259 Mannheim (DE); BAUMGARTL, Horst, 55122 Mainz (DE); SCHIERHOLZ, Jens-Uwe, 64625 Bensheim (DE); PERETOLCHIN, Maxim, 68161 Mannheim (DE)
(86) Internationale Anmeldenummer: PCT/EP2008/060611
(87) Internationale Veröffentlichungsnummer: WO 2009/021963

(56) Entgegenhaltungen:
- EP-A- 1 808 454
- WO-A-2005/103107
- US-A- 5 849 051
- DATABASE WPI Week 199743 Thomson Scientific, London, GB; AN 1997-465646 XP002501385 & JP 09 216163 A (NORITAKE CO LTD) 19. August 1997 (1997-08-19)

## Beschreibung

Die vorliegende Erfindung betrifft ein Verfahren zur Herstellung von abrasiven Schaumstoffen auf Basis eines Melamin/Formaldehyd-Kondensationsproduktes sowie die nach diesem Verfahren hergestellten Produkte. Bei dem Verfahren wird eine bevorzugt wässrige Lösung oder Dispersion, welche ein Melamin/Formaldehyd-Vorkondensat, eine anorganische Komponente in Form von Nanopartikeln sowie gegebenenfalls weitere Komponenten wie einen Emulgator, ein Treibmittel, einen Härter sowie weitere Zusatzstoffe enthält, durch Erhitzen verschäumt. Anschließend kann der Schaum durch Vernetzen des Vorkondensates ausgehärtet und zu verschiedenen Folgeprodukten weiterverarbeitet werden.

Anorganische Nanopartikel spielen in vielen Bereichen der industriellen Produktion eine zunehmende Rolle. Angefangen von der Chip-Technologie über die Gummiherstellung bis hin zur Medizin und Kosmetik finden Nanopartikel aufgrund ihrer besonderen Materialeigenschaften interessante Einsatzmöglichkeiten. Im Allgemeinen weisen Nanopartikel deutlich andere physikalische und chemische Eigenschaften auf als ihre grobkörnigen Analoga. Dies führt zu besonderen Anwendungsmöglichkeiten, da bei einem kleinen Partikelvolumen eine sehr hohe und auch chemisch variable Oberfläche zur Verfügung gestellt werden kann. So können beispielsweise mit Nanopartikeln die im Material auftretenden Energien stark gestreut werden, was beispielsweise im Bereich der Gummiindustrie zu einer erhöhten Elastizität von Reifen und einem verminderten Rollwiderstand geführt hat. Anorganische Nanopartikel lassen sich jedoch auch in den Bereichen Haushalt und Reinigung sinnvoll zum Einsatz bringen.

Verschiedene Verfahren zur Herstellung von Schaumstoffen und auch von abrasiven Schäumen sind bereits bekannt. So werden in EP-A 017 672 bereits im Jahre 1979 elastische Schaumstoffe auf Basis von Melamin/Formaldehyd-Kondensationsproduk-ten sowie ein Verfahren zu ihrer Herstellung beschrieben. Dabei wird eine hochkonzentrierte treibmittelhaltige Lösung oder Dispersion eines Melamin/Formaldehyd-Vorkondensates verschäumt und der Schaum ausgehärtet. Das Verschäumen kann durch Erhitzen auf eine Temperatur oberhalb des Siedepunktes des Treibmittels erfolgen und so durchgeführt werden, dass ein steiler Viskositätsanstieg im Wesentlichen erst dann einsetzt, wenn der Schäumvorgang beendet ist. Das Erhitzen wird vorzugsweise mit Heißluft vorgenommen, es kann jedoch auch durch Wasserdampf, Hochfrequenzbestrahlung oder Ausnutzen von Reaktionswärme geschehen. Den Schaumstoffen können in EP-A 017 672 auch pulverförmige anorganische Komponenten als Füllstoffe oder Flammschutzmittel zugesetzt werden.
In dem Dokument NL-A 102 4682 werden offenzellige Hartschaumstoffe, beispielsweise auf Basis von Melamin-Formaldehyd, beschrieben, denen auch anorganische Zusätze vor oder nach dem Verschäumen zugegeben werden können. Es handelt sich hierbei jedoch nicht um flexible Melaminschäume, sondern um Hartschäume. Diese Hartschäume haben andere physikalische Eigenschaften als die erfindungsgemäßen flexiblen Schäume. Die Zusätze, wie beispielsweise Sand, werden in NL-A 102 4682 nicht im Hinblick auf eine erhöhte Abrasivität des Schaumstoffs ausgewählt.

Das Dokument WO 2006/003421 beschreibt flexible Polyurethan-Schaumstoffe, die Nanopartikel basierend auf Schichtsilikaten (zum Beispiel Cloisite) enthalten können.

Aus WO 2005/100497 sind porenhaltige Kunststoffe aus einem porösen Polymer bekannt, bei denen die Poren teilweise mit abrasiven Partikeln aus Metalloxiden (zum Beispiel aus Aluminium-, Silizium-, Titan-, Cer-, Zirkonium-, Germanium- oder Magnesium-Oxiden) gefüllt sind. Diese werden zum Polieren von Halbleiterelementen wie Wafern eingesetzt. Die Polymere basieren auf Polyurethanen und Polyolefinen. Im Beispielteil wird ein Verfahren zum Öffnen von Poren bei Schäumen durch Anlegen von Vakuum vorgestellt.

In CA-A 2 293 906 werden Schaumstoffe für Haushaltsanwendungen beschrieben, die durch Imprägnieren der oberen Schicht eines aufgerauten Schaumkörpers mit einer Beschichtung erfolgt, die abrasive Zusätze, wie zum Beispiel Calciumcarbonat, Mikroglashohlkugeln, Quarz, Siliziumcarbid oder Aluminiumoxid enthält.

In JP-A 2001/287152 werden Polierkissen für die Oberflächenbehandlung von Wafern beschrieben, die durch Imprägnieren von Polyurethan-Schäumen mit abrasiven Imprägnierungen (zum Beispiel Siliziumdioxid oder Ceroxid) und anschließendes Verpressen erhalten werden.

Aus EP-A 1 683 831 kennt man den Zusatz von bis zu 5 Gew.-% anorganischer Nanopartikel zu den Komponenten eines Polyurethans und das anschließende Verschäumen zu einem Polyurethan-Schaum. Die Nanopartikel werden hier als Nukleierungsmittel zur Schaumstruktursteuerung verwendet.

In US 3,653,859 wird die Imprägnierung eines Schaumstoffs mit einer Dispersion beschrieben, die abrasive Zusätze enthält.

US 2003/207954 beschreibt Polyurethan-Schäume, die abrasive Zusätze wie z.B. Mineralien wie Feldspat enthalten können.

Auch in WO 1999/24223 werden Schaumstoffe beschrieben, die mit abrasiven Partikeln z.B. aus Aluminiumoxid oder Quarz ausgestattet sind.
In JP-A 2003/175466 wird die Imprägnierung des Schaumstoffs Basotect^{®} (Hersteller BASF) mit abrasiven Partikeln und einem elastomeren Binder beschrieben.

In EP-A 1 742 980 wird die kovalente Anbindung anorganischer Nanopartikel auf die Stegstruktur von Basotect beschrieben, um eine schmutzabweisende Wirkung zu erzielen.

Das deutsche Gebrauchsmuster DE 298 08 991 schlägt vor, zum Polieren von Kunststoffoberflächen eine Polierpaste zu verwenden, bei dem die Schleifmittel in einer Trägersubstanz dispergiert sind, bei der die Viskosität unter den Bedingungen des Poliervorgangs abnimmt.

In DE-A 31 02 567 wird eine Paste zum Polieren von Metalloberflächen offenbart, bei der in die Schmelze der Paste gleichmäßig verteilte Pulverteile eingebracht sind, deren Härte zwischen der Härte der Schleifkörper und der Härte der Schmelze liegt. Als Pulver werden hier Metallteilchen wie Kupferpulver, Aluminiumpulver, Zinkpulver und Messingpulver genannt.

Das Dokument JP 09216163 beschreibt abrasive Schaumstoffe auf Basis von Melamin und PVA enthaltend superfeine abrasive Partikel. Der abrasive Schaumstoff soll durch ein Thermoform-Verfahren ohne den Einsatz von Treibmitteln hergestellt werden.

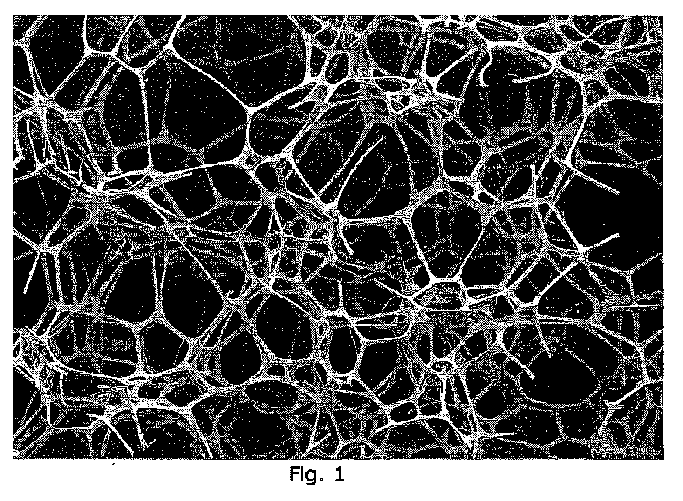

Das Dokument EP-A 1 808 454 beschreibt einen treibmittelfreien Aminoharzschaum, der aus einem Aminoharz und hydrophoben Nanopartikeln aufgebaut ist. Der in EP-A 1 808 454 beschriebene Aminoharzschaum weist einen hohen Anteil an geschlossen-porigen Strukturen (Seite 4, Absatz [0030] und Figur 1) und eine hohe Dichte von etwa 0,8 g/cm³ (Seite 5, Absatz [0037], Tabelle 3) auf. Weiterhin ist die Verwendung dieser Aminoharzschäume als Schall- und Energiedämmstoff beschrieben.

In gängigen Schleifmitteln und Polierpasten werden häufig Schleifkörper mit einer feinen Körnung und hoher Härte verwendet, welche jedoch während des Poliervorganges zu winzigen Kratzern auf der zu polierenden Oberfläche führen können. In vielen Bereichen der Technik (z. B. Herstellung von elektronischen Bauteilen), aber auch im Haushaltsbereich sind solche Kratzer auf Oberflächen unerwünscht. Auch kommen solche Schaumstoffe zum Einsatz, die keine hohe und dauerhafte Elastizität aufweisen und daher nur für einen sehr begrenzten Zeitraum einsetzbar sind, was aus ökologischen Aspekten nicht wünschenswert ist.

Um einen abrasiven Schaum bereitzustellen, gibt es verschiedene Möglichkeiten zur Kombination des Schaumstoffs mit abrasiv wirkenden Partikeln:
- Imprägnieren des Schaumstoffs mit einer Dispersion der Partikel (unter Zusatz von Bindemittel oder auch mit kovalenter Anbindung),
- Zusatz von abrasiven Partikeln zu einer Polierpaste
- Zusatz abrasiver Partikel zum Vorkondensat vor dem Verschäumen,
- Zusatz abrasiver Partikel zu den Einsatzstoffen bei der Herstellung des Vorkondensats und Verschäumen im Folgeschritt,
- Kombination der oben aufgeführten Verfahren.

Bei dem erfindungsgemäßen Verfahren kommen insbesondere Melamin/FormaldehydKondensate zum Einsatz. Diese weisen zum einen eine hohe und dauerhafte Elastizität auf und haben zum anderen bereits per se deutlich abrasive Eigenschaften.

Die erfindungsgemäß bevorzugt eingesetzten Melamin/Formaldehyd-Kondensate haben nach dem Verschäumen eine elastische Struktur mit zahlreichen feinen Stegen, bilden jedoch keine Membranen aus.

Die bei dem erfindungsgemäßen Verfahren zur Herstellung abrasiver Schäume einsetzbaren Melamin-Formaldehyd-Vorkondensate weisen in der Regel ein Molverhältnis Melamin zu Formaldehyd im Bereich zwischen 1 zu 1,3 und 1 zu 5 auf. Vorzugsweise liegt es jedoch zwischen 1 zu 1,5 und 1 zu 3,5. In diesem Bereich liegt auch das Molverhältnis in den unten genannten Beispielen.

Ein großtechnisch hergestellter, elastischer Schaumstoff auf Basis eines Melamin/Formaldehyd-Kondensats ist BASOTECT^{®} (Hersteller: BASF Aktiengesellschaft). Er wird häufig zur Schallabsorption und Wärmedämmung bzw. Isolierung von Gebäuden und zur Herstellung eines Reinigungsschwamms eingesetzt.

Der Erfindung lag als eine Aufgabe zugrunde, verbesserte abrasive Schaumstoffe bereitzustellen, die kostengünstig und einfach herstellbar sind, einen wirksamen Poliervorgang ermöglichen und nicht zur Verkratzung von Oberflächen führen. Diese Schaumstoffe sollen auch eine hohe Lebensdauer aufweisen. Ferner soll die Steigerung der abrasiven Eigenschaften nicht zu Lasten der elastischen Eigenschaften und des optischen Erscheinungsbildes des Schaumstoffs gehen.

Diese Aufgabe wird dadurch gelöst, dass ein Verfahren bereitgestellt wird zur Herstellung eines abrasiven Schaumstoffs auf Basis eines Melamin-Formaldehyd-Konden-sationsproduktes enthaltend anorganische Nanopartikel, umfassend die Schritte:
(1) Herstellen einer Lösung oder Dispersion enthaltend ein Vorkondensat des herzustellenden Schaumstoffs sowie anorganische Nanopartikel und wenigstens ein physikalisches Treibmittel mit einem Siedepunkt zwischen 0 und 80 °C und gegebenenfalls weitere Zusatzkomponenten (Z),
(2) Aufschäumen des Vorkondensates durch Erhitzen der Lösung oder Dispersion aus Schritt (1) auf eine Temperatur von mindestens 60 °C, um einen Schaumstoff zu erhalten, der anorganische Nanopartikel enthält, sowie gegebenenfalls
(3) Tempern des in Schritt (2) erhaltenen Schaumstoffes bei einer Temperatur von 120 bis 300 °C.
Die einzelnen Verfahrensschritte und die verschiedenen Variationsmöglichkeiten werden nachfolgend näher ausgeführt. Als Ausgangsprodukte des Verfahrens können entweder Melamin und Formaldehyd dienen oder aber bereits an anderer Stelle hergestellte (oder auch handelsübliche) Vorkondensate der beiden Komponenten, die Kondensationsprodukte mittleren Molekulargewichts enthalten.
Die Erfindung hat auch ein Verfahren zur Herstellung von abrasiven Schaumstoffen enthaltend anorganische Nanopartikel zum Gegenstand, bei dem ein oder mehrere polymerisationsfähige Komponenten sowie gegebenenfalls ein oder mehrere Dispergiermittel bzw. Emulgatoren und/oder ein oder mehrere Effektstoffe (E) in ein Lösemittel, wie beispielsweise Wasser, eingebracht werden und die daraus (zum Beispiel durch kräftiges Rühren) resultierende Emulsion durch Energie-Eintrag polymerisiert wird.

Bevorzugt wird erfindungsgemäß als Lösemittel Wasser eingesetzt oder aber ein Gemisch von Wasser mit einer wassermischbaren weiteren Flüssigkeit. Im Prinzip ist es jedoch auch möglich, andere Flüssigkeiten als Wasser oder Flüssigkeitsgemische als Lösemittel zu verwenden. Das Lösemittel kann vorzugsweise auch gelöste Komponenten enthalten, beispielsweise ein Dispergiermittel bzw. Emulgator.

In einer besonderen Ausführungsform der Erfindung erfolgen das Aufschäumen des Vorkondensates und das Tempern des Schaumstoffes in einem Verfahrensschritt.

Es ist auch möglich, dass die Lösung oder Dispersion in Schritt (1) zusätzlich mindestens einen Emulgator und/oder mindestens eine den pH-Wert regulierende Komponente enthält. Häufig enthält die Lösung oder Dispersion in Schritt (1) zusätzlich mindestens einen Emulgator und mindestens eine den pH-Wert regulierende Komponente.

Bei dem erfindungsgemäßen Verfahren zur Herstellung von abrasiven Schäumen wird häufig zunächst eine Rohdispersion bzw. Lösung hergestellt, die das "Lösemittel", die Monomere bzw. das Vorkondensat, die anorganischen Partikel und gegebenenfalls weitere organische Komponenten enthält. Die Zubereitung der Rohdispersion kann dabei auf verschiedene Weisen erfolgen. Diese Rohdispersion kann durch Energieeintrag weiter homogenisiert werden.

Vorteilhaft kann es sein, die Herstellung der Rohdispersion in einem kontinuierlichen Verfahren durchzuführen, wobei im Prinzip auch eine Temperaturerhöhung angewendet werden kann.

Die Rohdispersion enthält häufig Dispergiermittel bzw. Emulgatoren und/oder Schutzkolloide. Diese Dispergiermittel bzw. Emulgatoren und/oder Schutzkolloide können im Prinzip zu einem beliebigen Zeitpunkt zur Rohdispersion gegeben werden, sie können jedoch auch bereits in dem Lösemittel bei Einbringung der anorganischen Komponenten vorhanden sein. Geeignete Emulgatoren sind z. B. handelsübliche Dispergiermittel bzw. Netzmittel.

In einer weiteren Ausführungsform der Erfindung wird eine Lösung oder Dispersion in Schritt (1) eingesetzt, die anorganische Nanopartikel mit einer mittleren Partikelgröße von kleiner als 1000 nm, vorzugsweise von kleiner als 100 nm, z. B. von 1,5 nm bis 100 nm, und insbesondere von 5 bis 50 nm enthält.

Die in Schritt (1) eingesetzten anorganischen Nanopartikel können ausgewählt werden z. B. aus einer oder mehreren Verbindungen der Gruppe bestehend aus Siliziumdioxid, Titanoxid, Zirkoniumoxid, Zinkoxid, Magnetit, Aluminiumoxid, Aluminiumsilikat und Lanthanidenoxide (vorzugsweise Ceroxid), jeweils bevorzugt mit einer mittleren Partikelgröße von kleiner als 100 nm, insbesondere 5 bis 50 nm.

Die Lösung oder Dispersion in Schritt (1) enthält erfindungsgemäß wenigstens ein physikalisches Treibmittel mit einem Siedepunkt zwischen 0 und 80 °C. Die einsetzbaren Treibmittel werden nachfolgend noch erläutert. Vorzugsweise wird wenigstens ein Treibmittel aus der Gruppe der physikalischen Treibmittel, beispielsweise Alkane wie z. B. Pentan, eingesetzt.

Im Verfahrensschritt (2) erfolgt ein Erwärmen zum Aufschäumen des Vorkondensates. Durch ein Erhitzen der Lösung oder Dispersion aus Schritt (1) auf eine Temperatur von mindestens 40° C, vorzugsweise mindestens 60 °C, kann ein Schaumstoff erhalten werden. Die genau anzuwendende Temperatur hängt auch vom eingesetzten Treibmittel (z. B. von dessen Siedepunkt) ab. Das Erhitzen in Schritt (2) kann z. B. durch die Verwendung heißer Gase (wie Luft oder Inertgase) und/oder eine Hochfrequenzbestrahlung (z. B. Mikrowellen) erfolgen.

In einer besonderen Ausführungsform der Erfindung besteht die anorganische Nanopartikel-Komponente im Wesentlichen oder auch vollständig aus Siliziumdioxid.

Die Nanopartikel-Komponente ist in der Lösung oder Dispersion von Schritt (1) in einer Menge von 0,01 bis 50 Gew.-%, vorzugsweise von 1 bis 15 Gew.-%, bezogen auf das Gewicht des Vorkondensats, vorhanden.

Die Menge der eingesetzten Nanopartikel-Komponente kann jedoch je nach Material und Einsatzzweck variiert werden. Eine Menge an Nanopartikel-Komponente(n) von 1 bis 10 Gew.-%, bezogen auf das Gewicht des Vorkondensats, hat sich bewährt.

In einer besonderen Ausführungsform der Erfindung enthält die Lösung oder Dispersion von Schritt (1) neben mindestens einem Treibmittel, einem Emulgator und einer den pH-Wert regulierende Komponente als weitere Zusatzkomponente einen Duftstoff und/oder einen Farbstoff. Diese können z. B. in einer Menge von 0,01 bis 2 Gew.-%, bezogen auf das Gewicht des Vorkondensats, enthalten sein. Diese Komponenten führen zu vorteilhaften olfaktorischen bzw. optischen Eigenschaften des Endprodukts.

Der Schritt (3) des Verfahrens ist im Prinzip fakultativ. Die Temperaturbehandlung kann der Aushärtung dienen und ferner den Gehalt an Ausgangskomponenten (z. B. Monomeren) deutlich herabsetzen. Bevorzugt wird eine Durchführung des Verfahrens in einer Weise, dass kein freier Formaldehyd mehr im Schaum vorhanden ist.

Als Farbstoffe kommen bei dem erfindungsgemäßen Verfahren insbesondere wasserlösliche Verbindungen in Frage, die nicht auswaschbar sind und ferner eine Temperaturstabilität aufweisen, die im Verfahrensschritt (3) zu keiner Veränderung des Farbstoffs führt.

Als Duftstoffe kommen die üblichen im Bereich der Parfümerie und der Detergentienherstellung eingesetzten Riechstoffe in Frage. Beispielsweise kann den Monomeren eine Menge von 0,1 bis 5 Gew.-% eines Riechstoffes (wie Vanillin) zugesetzt werden.

Die Erfindung betrifft auch einen abrasiven Schaumstoff, herstellbar bzw. hergestellt nach einem der oben beschriebenen Verfahren. Dieser abrasive Schaumstoff enthält in der Regel gleichmäßig in der Polymermasse verteilte anorganische Nanopartikel mit einer mittleren Partikelgröße von kleiner als 100 nm. Er kann auch verschiedene Arten von Nanopartikeln enthalten, beispielsweise Siliziumdioxid-Nanopartikel (z. B. mit einer mittleren Teilchengröße von etwa 10 nm) sowie Ceroxid-Nanopartikel (z. B. mit einer mittleren Teilchengröße von etwa 5 nm).

Eine besondere Ausführungsform der Erfindung betrifft Formteile, enthaltend einen abrasiven Schaumstoff wie oben beschrieben. So können in einfacher Weise verschieden gestaltete Schaumstoff-Formteile hergestellt werden, z. B. ein Quader, ein Zylinder oder auch komplexere Formen (z. B. Tierfiguren).

Auch Gegenstand der Erfindung sind Schleifmittel, enthaltend einen abrasiven Schaumstoff wie oben beschrieben. Es ist möglich, den abrasiven Schaumstoff zu zerkleinern und beispielsweise auch in Mischung mit anderen Schleifmitteln zu verwenden.

Die vorliegende Erfindung hat auch die Verwendung eines Schaumstoffs, gegebenenfalls in Kombination mit weiteren Hilfsstoffen, als abrasiv wirkendes Reinigungs-, Schleif- oder Poliermittel zum Gegenstand.

Die einzelnen Schritte (1) bis (3) des erfindungsgemäßen Verfahrens werden im Folgenden näher beschrieben:

Der Schritt (1) des erfindungsgemäßen Verfahrens umfasst das Herstellen einer Lösung oder Dispersion enthaltend wenigstens ein Vorkondensat des herzustellenden Schaumstoffes und mindestens eine anorganische Nanopartikel-Komponente. Dabei geht man von einem Vorkondensat, bevorzugt von einem Melamin/Formaldehyd-Vorkondensat, aus. In einer bevorzugten Ausführungsform wird ein Schaumstoff auf Basis eines Melamin/Formaldehyd-Kondensationsproduktes eingesetzt.

Diese Melamin/Formaldehyd-Kondensationsprodukte können neben Melamin bis zu 50 Gew.-%, vorzugsweise bis 20 Gew.-%, anderer Duroplastbildner und neben Formaldehyd bis zu 50 Gew.-%, vorzugsweise bis zu 20 Gew.-% anderer Aldehyde einkondensiert enthalten. Bevorzugt ist jedoch ein unmodifiziertes Melamin/Formaldehyd-Kondensationsprodukt. Als Duroplastbildner können beispielsweise Alkyl- und Arylsubstituiertes Melamin, Harnstoff, Urethane, Carbonsäureamide, Dicyandiamid, Guanidin, Sulfurylamid, Sulfonsäureamide, aliphatische Amine, Glykole, Phenol und dessen Derivate eingesetzt werden.

Als Aldehyde können zum Beispiel Acetaldehyd, Trimethylolacetaldehyd, Acrolein, Benzaldehyd, Furfural, Glyoxal, Glutaraldehyd, Phthalaldehyd und Terephthalaldehyd eingesetzt werden. Weitere Einzelheiten über Melamin/Formaldehyd-Kondensationsprodukte finden sich in Houben-Weyl, Methoden der organischen Chemie, Band 14/2, 1963, Seiten 319 bis 402.

Das Molverhältnis Melamin zu Formaldehyd in dem Vorkondensat liegt im Allgemeinen im Bereich von 1 : 1 und 1 : 5. Zur Herstellung besonders formaldehydarmer Schaumstoffe wird das Molverhältnis im Bereich von 1 : 1,3 bis 1 : 1,8 gewählt und ein sulfitgruppenfreies Vorkondensat eingesetzt, wie es zum Beispiel in WO 2001/94436 beschrieben wird.

Die Melaminharze können einkondensierte Sulfitgruppen aufweisen, was beispielsweise durch Zusatz von 1 bis 20 Gew.-% Natriumhydrogensulfit bei der Kondensation des Harzes erreicht werden kann. In einer bevorzugten Ausführungsform enthalten die erfindungsgemäß einsetzbaren Melaminharz-Vorkondensate keine Sulfitgruppen, d.h. der Sulfitgruppengehalt sollte unter 1%, bevorzugt unterhalb 0,1%, besonders bevorzugt 0% betragen.

Die Lösung bzw. Dispersion, enthaltend ein Vorkondensat des herzustellenden Schaumstoffes und die Nanopartikel, kann nach dem Fachmann bekannten Verfahren hergestellt werden. In einer bevorzugten Ausführungsform wird das entsprechende Vorkondensat in Wasser hergestellt. Es können bei der Herstellung des Vorkondensates Alkohole, beispielsweise Methanol, Ethanol oder Butanol zugesetzt werden, um teilweise oder vollständig veretherte Kondensate zu erhalten.

Durch die Bildung der Ethergruppen werden die Löslichkeit des Vorkondensates und die mechanischen Eigenschaften des vollständig ausgehärteten Materials beeinflusst.

Die in der Lösung oder Dispersion, welche in Schritt (1) des erfindungsgemäßen Verfahrens hergestellt wird, vorliegenden Nanopartikel sind in einer bevorzugten Ausführungsform ausgewählt aus der Gruppe bestehend aus Siliziumoxid, Ceroxid, Aluminiumoxid und Mischungen davon.

In einer weiteren bevorzugten Ausführungsform der Erfindung enthält die Lösung oder Dispersion zusätzlich mindestens einen Emulgator und/oder mindestens einen Härter.

Als Emulgator können anionische, kationische und nicht ionische Tenside sowie Mischungen davon eingesetzt werden.

Geeignete anionische Tenside sind beispielsweise Diphenylenoxidsulfonate, Alkan- und Alkylbenzolsulfonate, Alkylnaphthalinsulfonate, Olefinsulfonate, Alkylethersulfonate, Fettalkoholsulfate, Ethersulfate, α-Sulfofettsäureester, Acylaminoalkansulfonate, Acylisothionate, Alkylethercarboxylate, N-Acylsarcosinate, Alkyl- und Alkyletherphosphate. Als nicht ionische Tenside können Alkylphenolpolyglykolether, Fettalkoholpolyglykolether, Fettsäurepolyglykolether, Fettsäurealkanolamide, Ethylenoxid/Propylenoxid-Blockcopolymere, Aminoxide, Glycerinfettsäureester, Sorbitanester und Alkylpolyglykoside verwendet werden. Als kationische Emulgatoren können z.B. Alkyltriammoniumsalze, Alkylbenzyldimethylammoniumsalze und Alkylpyridiniumsalze eingesetzt werden.

Die Emulgatoren werden bevorzugt in Mengen von 0,2 bis 5 Gew.-%, bezogen auf das Vorkondensat, eingesetzt.

Als Härter können saure (acide) Verbindungen eingesetzt werden, die die Weiterkondensation des Melaminharzes katalysieren. Die Menge dieser Härter beträgt in der Regel 0,01 bis 20 Gew.-%, bevorzugt 0,05 und 5 Gew.-%, jeweils bezogen auf das Vorkondensat.

Geeignete saure Verbindungen sind anorganische und organische Säuren, zum Beispiel ausgewählt aus der Gruppe bestehend aus Salzsäure, Schwefelsäure, Phosphorsäure, Salpetersäure, Ameisensäure, Essigsäure, Oxalsäure, Toluolsulfonsäuren, Amidosulfonsäuren, Säureanhydride und Mischungen davon.

Abhängig von der Wahl des Vorkondensates enthält die Lösung oder Dispersion ein Treibmittel. Dabei richtet sich die Menge des Treibmittels in der Lösung oder der Dispersion nach der erwünschten Dichte des Schaumstoffs. Prinzipiell können bei dem erfindungsgemäßen Verfahren sowohl physikalische als auch chemische Treibmittel verwendet werden. Als physikalische Treibmittel bieten sich zum Beispiel Kohlenwasserstoffe, beispielsweise Pentan, Hexan, halogenierte, insbesondere chlorierte und/oder fluorierte Kohlenwasserstoffe, beispielsweise Methylenchlorid, Chloroform, Trichlorethan, Fluorchlorkohlenwasserstoffe, teilhalogenierte Fluorchlorkohlenwasserstoffe (H-FCKW), Alkohole, beispielsweise Methanol, Ethanol oder Isomere des Propanols, Ether, Ketone und Ester, beispielsweise Ameisensäuremethylester, Ameisensäureethylester, Essigsäuremethylester oder Essigsäureethylester, in flüssiger Form oder Luft und Kohlendioxid als Gase an. Als chemische Treibmittel kommen zum Beispiel Isocyanate im Gemisch mit Wasser in Frage, wobei als wirksames Treibmittel Kohlendioxid freigesetzt wird. Ferner sind Carbonate und Bicarbonate im Gemisch mit Säuren geeignet, welche ebenfalls Kohlendioxid erzeugen. Auch geeignet sind Azoverbindungen, wie z.B. Azodicarbonamid.

Erfindungsgemäß enthält die Lösung oder Dispersion in Schritt (1) des erfindungsgemäßen Verfahrens wenigstens ein physikalisches Treibmittel mit einem Siedepunkt zwischen 0 und 80 °C. Dieses Treibmittel liegt in der Lösung bzw. Dispersion bevorzugt in einer Menge von 1 bis 40 Gew.-%, insbesondere 1,5 bis 30 Gew.-% bezogen auf das Vorkondensat, vor.. Wird als bevorzugtes Treibmittel Pentan eingesetzt, so werden bevorzugt 5 bis 15 Gew.-% Pentan, bezogen auf das Vorkondensat, eingesetzt.

In einer weiteren Ausführungsform enthält die in Schritt (1) hergestellte Lösung bzw. Dispersion, abgesehen von dem wenigstens einen Vorkondensat des herzustellenden Schaumstoffes und den Nanopartikeln, auch einen Emulgator sowie gegebenenfalls einen Härter und gegebenenfalls ein Treibmittel.

In einer weiteren Ausführungsform ist sie frei von weiteren Zusatzstoffen. Für manche Zwecke kann es jedoch günstig sein, 0,1 bis 20 Gew.-%, bevorzugt weniger als 10 Gew.- %, bezogen auf das Vorkondensat, an üblichen Zusatzstoffen, wie Farbstoffe, Flammschutzmittel, UV-Stabilisatoren, Mittel zur Herabsetzung der Brandgastoxizität oder zur Förderung der Verkohlung zuzusetzen.

Es ist auch möglich, dem Vorkondensat Effektstoffe zuzusetzen. Die abrasiven Schaumstoffe enthalten in einer Ausführungsform mindestens einen Effektstoff (E) aus der Gruppe der Farbstoffe, Duftstoffe, optischen Aufheller, UV-Absorbern und Pigmente. Dieser Effektstoff ist bevorzugt homogen in dem Schaumstoff verteilt.

Als Pigmente können die gängigen anorganischen natürlichen (z.B. Kreide) oder synthetischen Pigmente (z.B. Titanoxide), aber auch organische Pigmente eingesetzt werden.

Als Effektstoffe können in den Schaumstoff, z.B. zur Steigerung des Weißgrads optische Aufheller eingebracht werden, die durch ihre bläuliche Fluoreszenz (komplementäre Farbe) Vergrauungen und Vergilbungen kompensieren. Geeignet sind hier grundsätzlich alle blau emittierenden Fluoreszenzfarbstoffe, z.B. die kommerziell zugänglichen Produkte, z.B. Ultraphor^{®} (BASF), Leucophor^{®} (Clariant) oder Tinopal^{®} (Ciba) oder andere Produkte aus den chemischen Substanzklassen der Stilbene, Distyrylbiphenyle, Cumarine, Naphthalsäureimide und den über Doppelbindungen verknüpften Benzoxazol- und Benzimidazolsystemen.
Die optischen Aufheller können getrennt oder zusammen mit dem Vorkondensat in den Herstellungsprozess eingeschleust werden. Wird als Effektstoff ein optischer Aufheller eingesetzt, so liegt seine Konzentration im Allgemeinen bei 0,01 bis 10 %, bezogen auf das Gewicht der Monomeren.

Die Erfindung hat auch abrasive Schäume zum Gegenstand, die einen Wirkstoff (E) enthalten. Der Wirkstoff kann z. B. ein Biozide (z.B. ein Bacterizid) sein. Der Gehalt an Wirkstoff lässt sich bei dem erfindungsgemäßen Verfahren gezielt steuern und ist je nach Wirkstoff unterschiedlich. Der Gehalt beträgt im Allgemeinen von 0,001 bis 20 Gew.-%, bezogen auf die Menge des eingesetzten Vorkondensats.

Der Wirkstoff ist dabei bevorzugt homogen in dem Schaumstoff verteilt. Als Biozide sind beispielsweise diverse handelsübliche Bacterizide oder Algizide zu nennen. Biozide kommen in vielen Bereichen zum Einsatz und werden zur Bekämpfung von Bakterien, Pilzen oder Algen verwendet. Bevorzugt werden erfindungsgemäß als Wirkstoff organische Biozide eingesetzt. Beispiele für diese Substanzen sind Chloroisocyanurate, quarternäre Ammoniumverbindungen (Quats), Hydantoine, Isothiazolinone, Parabene, Triclosan, 2-Bromo-2-nitropropan-1,3-diol, Phenoxyethanol oder Hexahydrotriazine.

Als Duftstoffe können in dem erfindungsgemäßen Verfahren übliche Stoffe eingesetzt werden, die einen olfaktorischen Reiz ausüben, beispielsweise wohlriechende Riechstoffe, die im Bereich der Parfümerie Einsatz finden (z.B. Vanilin oder Citral). Der Einsatz von Riechstoffen in den Nanopartikeln ist insbesondere für den Einsatz für Haushaltsprodukte und die Kosmetikindustrie von Interesse.

Da die erfindungsgemäß hergestellten Schaumstoffe im Allgemeinen offenporig sind und Wasser aufnehmen können, kann es für manche Anwendungszwecke vorteilhaft sein, Hydrophobierungsmittel in Mengen von vorzugsweise 0,2 bis 5 Gew.-% zuzusetzen. Geeignete Hydrophobierungsmittel sind beispielsweise Silikone, Paraffine, Silikon- und Fluortenside, Aluminiumstearate, Hydrophobine oder Fluorcarbonharze.

In einer weiteren bevorzugten Ausführungsform liegt in der in Schritt (1) des erfindungsgemäßen Verfahrens hergestellten Lösung oder Dispersion das Vorkondensat in einer Menge von 55 bis 85, besonders bevorzugt von 63 bis 80 Gew.-% vor. Die hergestellte Lösung oder Dispersion des Vorkondensates hat bevorzugt eine Viskosität von 1 bis 3000 dPas, besonders bevorzugt von 5 bis 2000 dPas.

Die Nanopartikel-Komponente und die gegebenenfalls weiteren in der Lösung oder Dispersion vorliegenden Zusatzstoffe werden mit der Lösung oder Dispersion des Vorkondensates, bevorzugt homogen, vermischt, wobei das gegebenenfalls vorliegende Treibmittel auch unter Druck eingepresst werden kann. Man kann jedoch auch von einem festen, zum Beispiel sprühgetrockneten Vorkondensat ausgehen und dieses dann mit der Nanopartikel-Komponente und gegebenenfalls weiteren Zusatzstoffen vermischen.

Das Vermischen der Komponenten kann mit allen dem Fachmann bekannten Verfahren, zum Beispiel in einem Extruder, vorgenommen werden. In einer bevorzugten Ausführungsform wird die Lösung oder Dispersion durch eine Düse ausgetragen und unmittelbar anschließend in Schritt (2) erhitzt und dabei verschäumt.

In Schritt (2) des erfindungsgemäßen Verfahrens erfolgt das Aufschäumen des Vorkondensates durch Erhitzen der Lösung oder Dispersion aus Schritt (1), um einen Schaumstoff zu erhalten, der Nanopartikel enthält. Dazu wird die Lösung oder Dispersion z. B. auf eine Temperatur von mindestens 60° C erwärmt.

Das Erhitzen der in Schritt (1) hergestellten Lösung oder Dispersion kann in einer bevorzugten Ausführungsform durch heiße Gase oder Hochfrequenzbestrahlung vorgenommen werden. Besonders bevorzugt wird das erforderliche Erhitzen durch Ultrahochfrequenzbestrahlung durchgeführt. Hierbei wird beispielsweise mit Mikrowellen im Frequenzbereich von 0,2 GHz bis 100 GHz gearbeitet. Bevorzugt werden z.B. die Frequenzen von 0,915, 2,45 und 5,8 GHz eingesetzt, besonders bevorzugt wird Strahlung mit einer Frequenz von 2,45 GHz verwendet. Strahlungsquelle für die dielektrische Strahlung ist beispielsweise das Magnetron, wobei auch mit mehreren Magnetronen gleichzeitig bestrahlt werden kann. Es ist darauf zu achten, dass bei der Bestrahlung die Feldverteilung möglichst homogen ist, um eine ungleichmäßige Erwärmung, und damit verbunden ein ungleichmäßiges Aufschäumen, zu vermeiden.

Die Bestrahlung wird bevorzugt so durchgeführt, dass die Leistungsaufnahme der Lösung oder Dispersion 5 bis 200, bevorzugt 9 bis 120 kW, jeweils bezogen auf ein Kilogramm Lösung bzw. Dispersion, beträgt. Ist die aufgenommene Leistung geringer, findet kein Aufschäumen mehr statt und die Mischung härtet nur noch aus. Innerhalb des bevorzugten Bereichs schäumt die Mischung umso schneller, je größer die Leistungsaufnahme ist. Oberhalb von etwa 200 kW pro Kilogramm Lösung oder Dispersion erhöht sich die Schäumgeschwindigkeit nicht mehr wesentlich.

Die Bestrahlung der zu verschäumenden Mischung erfolgt bevorzugt unmittelbar nachdem sie aus der Schaumdüse ausgetreten ist. Dabei wird die in Folge Temperaturerhöhung und Verdampfen des gegebenenfalls vorhandenen Treibmittels aufschäumende Mischung auf umlaufende Bänder aufgebracht, die einen Rechteck-Kanal zur Formung in entsprechende Formteile bilden.

Der in Schritt (2) des erfindungsgemäßen Verfahrens erhaltene Schaumstoff wird in Schritt (3) des erfindungsgemäßen Verfahrens bei einer Temperatur von 120 bis 300 °C getempert, d.h. einer Temperaturbehandlung unterworfen. Dieser Schritt (3) kann jedoch auch mit Schritt (2) zusammengefasst werden.

In Schritt (3) werden die hergestellten Schaumstoffe bevorzugt 1 bis 180 min, besonders bevorzugt 5 bis 60 min lang auf Temperaturen von 120 bis 300 °C, bevorzugt 150 bis 250 °C erhitzt, wobei im Schaumstoff verbliebenes Lösungsmittel, Treibmittel und gegebenenfalls vorhandenes Formaldehyd weitgehend entfernt wird.

In der Praxis genügt bei den erfindungsgemäßen Schaumstoffen in der Regel ein ca. 30-minütiges Tempern bei 220 °C. Der nach der EU-Norm EN ISO 14184-1 gemessene Formaldehyd-Gehalt ist dann niedriger als 40 mg, bevorzugt niedriger als 30, besonders bevorzugt niedriger als 20 mg pro Kilogramm Schaumstoff. Bei der genannten Prüfmethode wird eine Schaumstoffprobe eine Stunde in 40 °C warmem Wasser extrahiert und der extrahierte Formaldehyd analytisch bestimmt.

Die erfindungsgemäß hergestellten abrasiven Schaumstoffe weisen vorzugsweise eine Dichte von etwa 3 bis 50 g pro Liter auf.

Die vorliegende Erfindung betrifft auch einen Schaumstoff, herstellbar nach dem erfindungsgemäßen Verfahren. Des Weiteren betrifft die vorliegende Erfindung einen Schaumstoff, bevorzugt auf Basis eines Melamin/Formaldehyd-Kondensations-produktes, enthaltend wenigstens eine Nanopartikel-Komponente, wobei diese vorzugsweise gleichmäßig verteilt ist.

Diese Schaumstoffe können als Platten, Bahnen oder Pulver hergestellt werden oder zu Schaumfolien (z. B. mit einer Dicke von wenigen Millimetern) verarbeitet werden.

Des Weiteren betrifft die vorliegende Erfindung ein Formteil, enthaltend einen erfindungsgemäßen Schaumstoff.

Des Weiteren betrifft die vorliegende Erfindung ein Schleifmittel enthaltend einen erfindungsgemäßen Schaumstoff.

Die Erfindung betrifft auch die Verwendung eines erfindungsgemäßen Schaumstoffes als abrasives Mittel. Aufgrund der hohen Härte vernetzter Melaminharze können die Schaumstoffe auch für abrasiv wirkende Reinigungs-, Schleif- und Polierschwämme eingesetzt werden. Die offenzellige Struktur der Schaumstoffe erlaubt zusätzlich die Aufnahme und Speicherung geeigneter Reinigungsmittel sowie weiterer Schleif- und Poliermittel im Innern der Schaumstoffe.

Auch können die Schwämme für spezielle Reinigungsaufgaben hydrophob und oleophob ausgerüstet werden. Wegen der niedrigen Formaldehyd-Emissionen lassen sich die erfindungsgemäßen Schaumstoffe auch im Hygienesektor einsetzen. Des Weiteren kann der erfindungsgemäße Schaumstoff als Bestandteil von Reinigungsmitteln verwendet werden.

Die Erfindung wird durch die nachfolgenden Beispiele erläutert.

### Beispiel 1: Verschäumen eines Vorkondensats unter Zusatz von abrasiven Nanopartikeln

Zur Herstellung eines modifizierten Melaminharzschaumstoffes, bei dem die abrasiven Partikel simultan zur Verschäumung in den Schaumstoff inkorporiert werden, wurden 70 Gew.-Teile Melamin-Formaldehyd-Vorkondensat (mit einem Molverhältnis 1 : 1,6) in 30 Gew.-Teilen einer wässrigen Dispersion kolloidaler Siliziumdioxidpartikel gelöst (Feststoffanteil 45 Gew.-%, mittlere Teilchengröße 30 nm), bevor ein Emulgator (3 Gew.-% eines ethoxylierten Fettalkohols mit mehr als 20 Ethylenoxideinheiten), Pentan (10 Gew.-%) und die Ameisensäure (3 Gew.-%) zugesetzt wurden.

Anschließend wurde gerührt und anschließend in einer Form (zum Schäumen) aus Polypropylen durch Einstrahlung von Mikrowellenenergie bei 2,54 GHz verschäumt.

Nach dem Verschäumen wurde für 30 Minuten bei einer Temperatur von 220 °C getempert.

Der Schaumstoff unterscheidet sich in der Schaumstruktur, den mechanischen Eigenschaften, der Temperaturstabilität und des Brandverhaltens nicht signifikant von einem Vergleichsschaumstoff, der ohne Zusatz der Nanopartikel hergestellt wurde.

In rasterelektronenmikroskopischen Aufnahmen kann in diesem Beispiel beim erfindungsgemäßen Schaumstoff festgestellt werden, dass auf der Oberfläche der Stege des Schaumstoffs eine dünne Schicht aus anorganischen Nanopartikeln ausgebildet ist, wodurch die Abrasivität des Materials deutlich gesteigert werden kann.

Eine Nanostrukturierung der Stegoberfläche durch die anorganischen Partikel oder gebildete Agglomerate konnte beobachtet werden.

### Beispiel 2: Herstellung eines Vorkondensats unter Zusatz abrasiver Nanopartikel

367,4 g (6,0 Mol) Formaldehyd (49 %) und 280,0 g destilliertes Wasser wurden im 4-Liter-Vierhalskolben vorgelegt und mit 0,5 ml Natronlauge (NaOH 25 %) auf pH 8,8 eingestellt. Anschließend wurden 30,8 g einer wässrigen Dispersion von kolloidalem Siliziumdioxid (Feststoffanteil 40 %, mittlere Partikelgröße ca. 15 nm) und danach 472,5 g (3,75 Mol) Melamin zugegeben.

Es wurde auf 98 °C aufgeheizt und bei 98 °C und pH 8,8 (kompensiert) gerührt bis zum Trübungspunkt TP (1 : 5) = 45 °C. Bei Erreichen des Trübungspunktes wurde mit einem Eisbad auf Raumtemperatur abgekühlt. Durch die Temperaturkompensation stieg der pH-Wert beim Abkühlen auf Raumtemperatur auf 9,5-10.

### Beispiel 3: Verschäumen eines nanopartikelhaltigen Vorkondensats

Das aus Beispiel 2 erhaltene Vorkondensat wurde direkt zum Schäumen eingesetzt und wie folgt verschäumt:

10 Gew.-Teile des aus Beispiel 2 erhaltene Vorkondensat wurden in 3 Gew.-% eines E-mulgators aus einem ethoxylierten Fettalkohol (mehr als 20 Ethylenoxideinheiten) sowie 3 Gew.-% Ameisensäure und 10 Gew.-% Pentan, jeweils bezogen auf Harz, zugesetzt.

Anschließend wurde gerührt und anschließend in einer Form (zum Schäumen) aus Polypropylen durch Einstrahlung von Mikrowellenenergie bei 2,54 GHz verschäumt.

Der entstandene Schaumstoff unterscheidet sich in der Schaumstruktur, den mechanischen Eigenschaften, der Temperaturstabilität und des Brandverhaltens nicht signifikant von einem Vergleichsschaumstoff, der ohne Zusatz der Nanopartikel hergestellt wurde.

### Beispiel 4: Untersuchung der abrasiven Eigenschaften des Schaumstoffs

Ein abrasiver Schaumstoff mit Nanopartikeln gemäß Beispiel 1 und ein gemäß Beispiel 1 hergestellter Schaumstoff ohne Nanopartikelzusatz wurden hinsichtlich der abrasiven Eigenschaften in einem Vergleichsexperiment untersucht.

Beide Schaumstoffe wurden zunächst mit Wasser angefeuchtet. Es wurde jeweils eine glatte Aluminiumplatte (20 cm auf 20 cm Oberfläche) händisch mit beiden Schaumstoffen poliert. Der Poliervorgang erfolgte dabei mit gleichem Druck und in der gleichen Anzahl kreisender Bewegungen (50 Zyklen). Nach Beendigung der Behandlung wurde die Oberfläche optisch bewertet.

Die Oberfläche, die mit dem abrasiven Schaumstoff gemäß Beispiel 1 behandelt worden war, wies deutliche Abrasions-Spuren an der Oberfläche auf. Die mit dem Vergleichsmaterial behandelte Probe wies nur geringere Abrasions-Spuren auf.

In Figur 1 wird die mikroskopische Struktur des erfindungsgemäßen Schaumstoffs aus Beispiel 1 in einer rasterelektronenmikroskopischen Aufnahme gezeigt. Der Schaumstoff ist vollständig offenzellig. Die Schaumstruktur des erfindungsgemäßen Schaums entspricht der eines nicht-modifizierten Schaumstoffs. In Figur 1 entsprechen 1,5 cm der Aufnahme in etwa 100 µm; die Aufnahmen wurden bei einer Hochspannung von 5 Kilovolt gemessen.

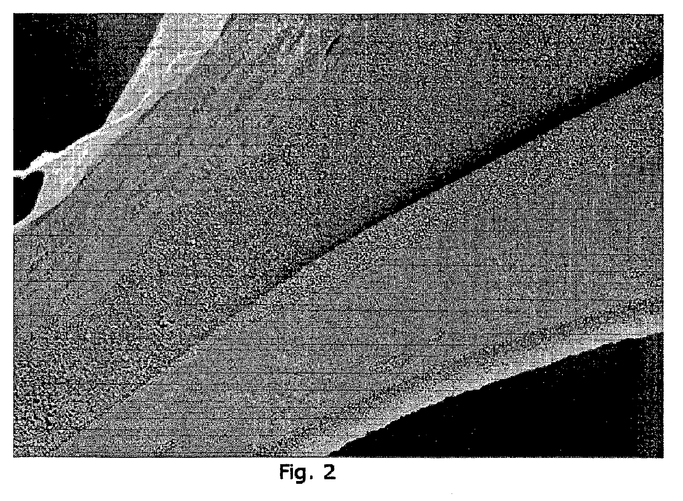

In Figur 2 wird die Nanostrukturierung der Oberfläche der Stege des erfindungsgemäßen Schaumstoffs gezeigt. Diese feine Schicht aus anorganischen Nanopartikeln tritt insbesondere auf der Oberfläche der Stege auf. Die Abrasivität kann durch die Nanopartikel an der Oberfläche des Schaumstoffs gesteigert werden. In Figur 2 entspricht 1 cm der Aufnahme in etwa 1 µm.

## Patentansprüche

1. Verfahren zur Herstellung eines abrasiven Schaumstoffs auf Basis eines Melamin-Formaldehyd-Kondensationsproduktes enthaltend anorganische Nanopartikel, umfassend die Schritte:
(1) Herstellen einer Lösung oder Dispersion enthaltend ein Vorkondensat des herzustellenden Schaumstoffs sowie anorganische Nanopartikel und wenigstens ein physikalisches Treibmittel mit einem Siedepunkt zwischen 0 und 80 °C und gegebenenfalls weitere Zusatzkomponenten (Z),
(2) Aufschäumen des Vorkondensates durch Erhitzen der Lösung oder Dispersion aus Schritt (1) auf eine Temperatur von mindestens 60 °C, um einen Schaumstoff zu erhalten, der anorganische Nanopartikel enthält, sowie gegebenenfalls
(3) Tempern des in Schritt (2) erhaltenen Schaumstoffes bei einer Temperatur von 120 bis 300 °C.

2. Verfahren nach Anspruch 1, **dadurch gekennzeichnet, dass** das Aufschäumen des Vorkondensates und das Tempern des Schaumstoffes in einem Verfahrensschritt erfolgen.

3. Verfahren nach Anspruch 1 oder 2, **dadurch gekennzeichnet, dass** die Lösung oder Dispersion in Schritt (1) zusätzlich mindestens einen Emulgator und/oder mindestens eine den pH-Wert regulierende Komponente enthält.

4. Verfahren nach einem der der Ansprüche 1 bis 3, **dadurch gekennzeichnet, dass** die Lösung oder Dispersion in Schritt (1) anorganische Nanopartikel mit einer mittleren Partikelgröße von kleiner als 1000 nm enthält.

5. Verfahren nach einem der der Ansprüche 1 bis 4, **dadurch gekennzeichnet, dass** die Lösung oder Dispersion in Schritt (1) anorganische Nanopartikel mit einer mittleren Partikelgröße von kleiner als 100 nm enthält.

6. Verfahren nach einem der der Ansprüche 1 bis 5, **dadurch gekennzeichnet, dass** die Lösung oder Dispersion in Schritt (1) anorganische Nanopartikel ausgewählt aus einer oder mehreren Verbindungen der Gruppe bestehend aus Siliziumdioxid, Titanoxid, Zirkoniumoxid, Zinkoxid, Magnetit, Aluminiumoxid, Aluminiumsilikat und Lanthanidenoxide, jeweils mit einer mittleren Partikelgröße von 5 bis 50 nm, enthält.

7. Verfahren nach einem der der Ansprüche 1 bis 6, **dadurch gekennzeichnet, dass** die Lösung oder Dispersion in Schritt (1) wenigstens ein Treibmittel aus der Gruppe der Alkane enthält.

8. Verfahren nach einem der Ansprüche 1 bis 7, **dadurch gekennzeichnet, dass** das Erhitzen in Schritt (2) durch die Verwendung heißer Gase und/oder eine Hochfrequenzbestrahlung erfolgt.

9. Verfahren nach einem der Ansprüche 1 bis 8, **dadurch gekennzeichnet, dass** die anorganische Nanopartikel-Komponente im Wesentlichen aus Siliziumdioxid besteht.

10. Verfahren nach einem der Ansprüche 1 bis 9, **dadurch gekennzeichnet, dass** die Nanopartikel-Komponente in der Lösung oder Dispersion von Schritt (1) in einer Menge von 0,01 bis 50 Gew.-%, bezogen auf das Gewicht des Vorkondensats, vorliegt.

11. Verfahren nach einem der Ansprüche 1 bis 10, **dadurch gekennzeichnet, dass** die Nanopartikel-Komponente in der Lösung oder Dispersion von Schritt (1) in einer Menge von 1 bis 10 Gew.-%, bezogen auf das Gewicht des Vorkondensats, vorliegt.

12. Verfahren nach einem der Ansprüche 1 bis 11, **dadurch gekennzeichnet, dass** die Lösung oder Dispersion von Schritt (1) neben mindestens einem Treibmittel, einen Emulgator, eine den pH-Wert regulierende Komponente und als weitere Zusatzkomponente einen Duftstoff und/oder einen Farbstoff in einer Menge von 0,01 bis 2 Gew.- %, bezogen auf das Gewicht des Vorkondensats, enthält.

13. Abrasiver Schaumstoff, herstellbar nach dem Verfahren gemäß einem der Ansprüche 1 bis 12.

14. Abrasiver Schaumstoff nach Anspruch 13, enthaltend gleichmäßig verteilte anorganische Nanopartikel mit einer mittleren Partikelgröße von kleiner als 100 nm.

15. Formteil, enthaltend einen abrasiven Schaumstoff nach Anspruch 13 oder 14.

16. Schleifmittel, enthaltend einen abrasiven Schaumstoff nach Anspruch 13 oder 14.

17. Verwendung eines Schaumstoffs nach Anspruch 13 oder 14, gegebenenfalls in Kombination mit weiteren Hilfsstoffen, als abrasiv wirkendes Reinigungs-, Schleif- oder Poliermittel.

## Claims

1. A process for production of an abrasive foam based on a melamine-formaldehyde condensate comprising inorganic nanoparticles, comprising the steps of:
(1) preparing a solution or dispersion comprising a precondensate of the foam to be produced, and also comprising inorganic nanoparticles and at least one physical blowing agent having a boiling point of from 0 to 80°C, and optionally comprising further added components (Z),
(2) foaming of the precondensate via heating of the solution or dispersion from step (1) to a temperature of at least 60°C, in order to obtain a foam which comprises inorganic nanoparticles, and optionally
(3) heat-conditioning, at a temperature of from 120 to 300°C, of the foam obtained in step (2).

2. The process according to claim 1, wherein the foaming of the precondensate and the heat-conditioning of the foam take place in one step of the process.

3. The process according to claim 1 or 2, wherein the solution or dispersion in step (1) also comprises at least one emulsifier and/or at least one pH-regulating component.

4. The process according to any of claims 1 to 3, wherein the solution or dispersion in step (1) comprises inorganic nanoparticles whose average particle size is smaller than 1000 nm.

5. The process according to any of claims 1 to 4, wherein the solution or dispersion in step (1) comprises inorganic nanoparticles whose average particle size is smaller than 100 nm.

6. The process according to any of claims 1 to 5, wherein the solution or dispersion in step (1) comprises inorganic nanoparticles selected from one or more compounds of the group consisting of silicon dioxide, titanium oxide, zirconium oxide, zinc oxide, magnetite, aluminum oxide, aluminum silicate, and lanthanide oxides, in each case with an average particle size of from 5 to 50 nm.

7. The process according to any of claims 1 to 6, wherein the solution or dispersion in step (1) comprises at least one blowing agent from the group of the alkanes.

8. The process according to any of claims 1 to 7, wherein the heating in step (2) takes place via the use of hot gases and/or via high-frequency irradiation.

9. The process according to any of claims 1 to 8, wherein the inorganic nanoparticle component consists essentially of silicon dioxide.

10. The process according to any of claims 1 to 9, wherein the amount present of the nanoparticle component in the solution or dispersion of step (1) is from 0.01 to 50% by weight, based on the weight of the precondensate.

11. The process according to any of claims 1 to 10, wherein the amount present of the nanoparticle component in the solution or dispersion of step (1) is from 1 to 10% by weight, based on the weight of the precondensate.

12. The process according to any of claims 1 to 11, wherein the solution or dispersion of step (1) comprises, in addition to at least one blowing agent, an emulsifier, a pH-regulating component, and, as further added component, an odorant and/or a dye, in an amount of from 0.01 to 2% by weight, based on the weight of the precondensate.

13. An abrasive foam that can be produced by the process according to any of claims 1 to 12.

14. The abrasive foam according to claim 13, comprising uniformly distributed inorganic nanoparticles whose average particle size is smaller than 100 nm.

15. A molding, comprising an abrasive foam according to claim 13 or 14.

16. A grinding agent, comprising an abrasive foam according to claim 13 or 14.

17. The use of a foam according to claim 13 or 14, optionally in combination with further auxiliaries, as abrasive cleaning agent, grinding agent or polishing agent.

## Revendications

1. Procédé pour la production d'une mousse abrasive à base d'un produit de condensation mélamineformaldéhyde contenant des nanoparticules inorganiques, comprenant les étapes :
(1) préparation d'une solution ou dispersion contenant un produit de précondensation de la mousse à produire ainsi que des nanoparticules inorganiques et au moins un agent d'expansion physique ayant un point d'ébullition compris entre 0 et 80 °C et éventuellement d'autres composants additifs (Z)
(2) moussage du produit de précondensation par chauffage de la solution ou dispersion provenant de l'étape (1) jusqu'à une température d'au moins 60 °C, afin d'obtenir une mousse qui contient des nanoparticules inorganiques, ainsi qu'éventuellement
(3) traitement thermique de la mousse obtenue dans l'étape (2), à une température de 120 à 300 °C.

2. Procédé selon la revendication 1, **caractérisé en ce que** le moussage du produit de précondensation et le traitement thermique de la mousse s'effectuent dans une étape du procédé.

3. Procédé selon la revendication 1 ou 2, **caractérisé en ce que** la solution ou dispersion dans l'étape (1) en outre contient au moins un émulsifiant et/ou au moins un composant régulant le pH.

4. Procédé selon l'une quelconque des revendications 1 à 3, **caractérisé en ce que** la solution ou dispersion dans l'étape (1) contient des nanoparticules inorganiques ayant une taille moyenne de particule inférieure à 1 000 nm.

5. Procédé selon l'une quelconque des revendications 1 à 4, **caractérisé en ce que** la solution ou dispersion dans l'étape (1) contient des nanoparticules inorganiques ayant une taille moyenne de particule inférieure à 100 nm.

6. Procédé selon l'une quelconque des revendications 1 à 5, **caractérisé en ce que** la solution ou dispersion dans l'étape (1) contient des nanoparticules inorganiques choisies parmi un ou plusieurs composés du groupe constitué par le dioxyde de silicium, l'oxyde de titane, l'oxyde de zirconium, l'oxyde de zinc, la magnétite, l'oxyde d'aluminium, le silicate d'aluminium et les oxydes de lanthanides, ayant chacun une taille moyenne de particule de 5 à 50 nm.

7. Procédé selon l'une quelconque des revendications 1 à 6, **caractérisé en ce que** la solution ou dispersion dans l'étape (1) contient au moins un agent d'expansion choisi dans le groupe des alcanes.

8. Procédé selon l'une quelconque des revendications 1 à 7, **caractérisé en ce que** le chauffage dans l'étape (2) s'effectue par l'utilisation de gaz chauds et/ou d'une irradiation haute fréquence.

9. Procédé selon l'une quelconque des revendications 1 à 8, **caractérisé en ce que** le composant-nanoparticules inorganiques consiste essentiellement en dioxyde de silicium.

10. Procédé selon l'une quelconque des revendications 1 à 9, **caractérisé en ce que** le composant-nanoparticules est présent dans la solution ou dispersion de l'étape (1) en une quantité de 0,01 à 50 % en poids, par rapport au poids du produit de précondensation.

11. Procédé selon l'une quelconque des revendications 1 à 10, **caractérisé en ce que** le composant-nanoparticules est présent dans la solution ou dispersion de l'étape (1) en une quantité de 1 à 10 % en poids, par rapport au poids du produit de précondensation.

12. Procédé selon l'une quelconque des revendications 1 à 11, **caractérisé en ce que** la solution ou dispersion de l'étape (1) outre au moins un agent d'expansion contient un émulsifiant, un composant régulant le pH et comme autre composant additif un parfum et/ou un colorant en une quantité de 0,01 à 2 % en poids, par rapport au poids du produit de précondensation.

13. Mousse abrasive, pouvant être produite conformément au procédé selon l'une quelconque des revendications 1 à 12.

14. Mousse abrasive selon la revendication 13, contenant des nanoparticules inorganiques réparties uniformément, ayant une taille moyenne de particule inférieure à 100 nm.

15. Pièce moulée, contenant une mousse abrasive selon la revendication 13 ou 14.

16. Abrasif, contenant une mousse abrasive selon la revendication 13 ou 14.

17. Utilisation d'une mousse selon la revendication 13 ou 14, éventuellement en association avec d'autres adjuvants, en tant que produit de nettoyage, abrasif ou produit de polissage.
